# FASCICULE DE BREVET EUROPEEN

(11) **EP 0 449 705 B1**
(45) Date de publication et mention de la délivrance du brevet: **27.10.1993**
(21) Numéro de dépôt: 91400760.4
(22) Date de dépôt: 21.03.1991
(51) Int. Cl.: B23P 19/04

(54) **Outil de robot pour la pose d'un joint annulaire**
Roboterwerkzeug zum Setzen von ringförmigen Profilen
Robot tool for installing an annular joint

(30) Priorité: 30.03.1990 FR 9004605
(43) Date de publication de la demande: 02.10.1991
(73) Titulaire: AUTOMOBILES PEUGEOT, 75116 Paris (FR); AUTOMOBILES CITROEN, 92200 Neuilly-sur-Seine (FR)
(72) Inventeur: Dos Santos, Francis, F-94400 Vitry sur Seine (FR)
(74) Mandataire: Boivin, Claude

(56) Documents cités:
- DE-A- 3 436 791
- DE-A- 3 541 865
- US-A- 4 780 943

## Description

Les joints chaussés sur une feuillure d'encadrement de porte de véhicule automobile peuvent être ouverts, c'est-à-dire rectilignes avec une longueur égale à celle de la périphérie de la feuillure, ou bien fermés, c'est-à-dire annulaires. Voir par exemple le document US-A-47 80 943.

La présente invention a pour objet un outil de robot destiné à chausser un joint annulaire comportant ou non un coin surmoulé et muni d'une partie en forme de pince propre à s'engager sur la feuillure.

Cet outil comprend une première roulette motorisée agissant à l'extérieur de la pince pour la chausser sur la feuillure, et une deuxième roulette engagée à l'intérieur de la pince et coopérant avec une roulette folle pour centrer le joint en amont du point chaussé et est caractérisé en ce que la deuxième roulette est également motorisée en synchronisme avec la première roulette.

On a décrit ci-après, à titre d'exemple non limitatif, un mode de réalisation de l'outil selon l'invention, avec référence aux dessins annexés dans lesquels :

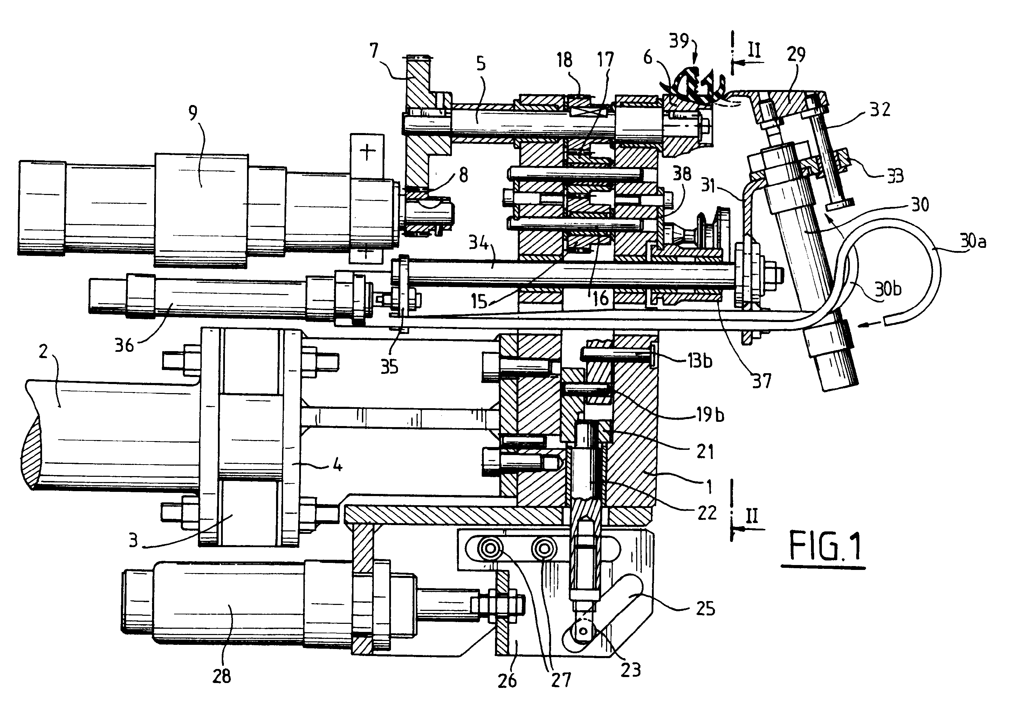

La Figure 1 est une vue en coupe partielle de l'outil;

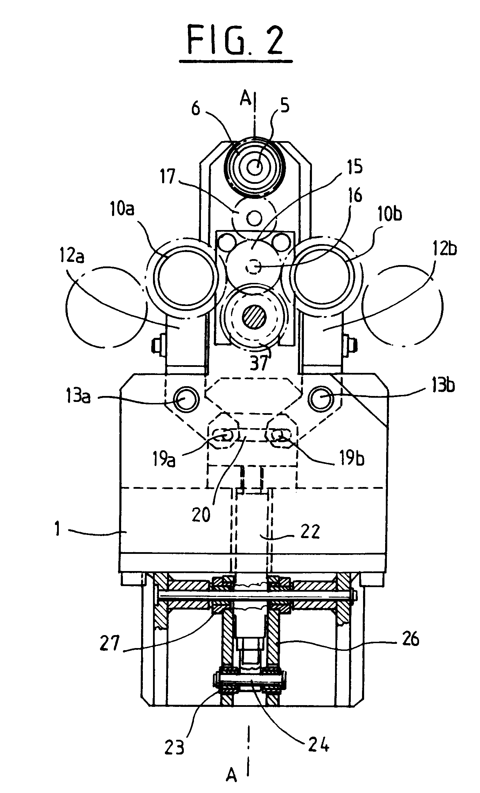

La Figure 2 est une vue de droite avec coupe partielle;

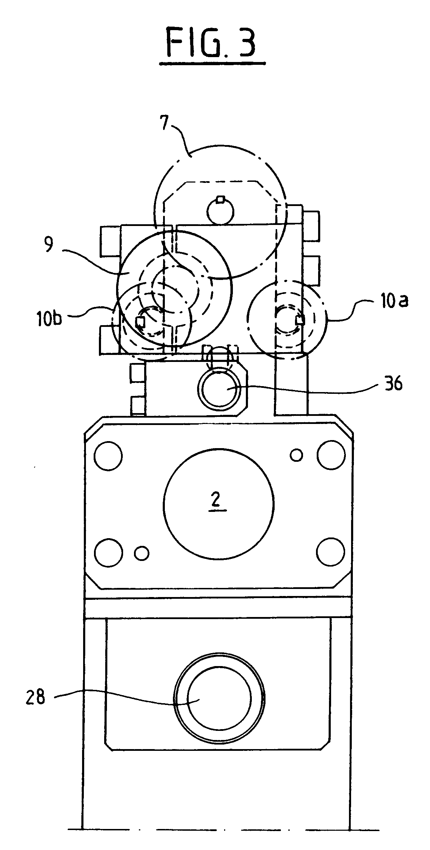

La Figure 3 en est une vue en élévation;

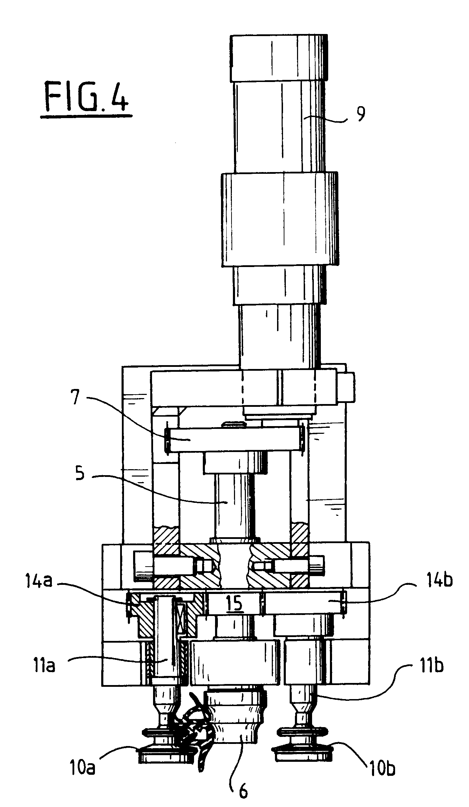

La Figure 4 en est une vue en plan avec arrachement partiel;
La Figure 5 est une vue en coupe d'un joint pouvant être posé par l'outil;
Les Figures 6 à 8 sont des schémas montrant l'utilisation de l'outil.

Tel qu'il est représenté au dessin, l'outil comprend un corps 1 qui peut être monté sur une entretoise 2 du robot par l'intermédiaire de quatre accouplements souples 3 vissés sur une interface 4 solidaire du corps.

Dans le corps 1 est monté à rotation un arbre 5 portant à l'une de ses extrémités une roulette d'entraînement 6 et à son autre extrémité un pignon 7 qui est en prise avec un pignon 8 claveté sur l'arbre de sortie d'un moteur réversible 9. Deux galets 10a et 10b sont clavetés sur des arbres 11a et 11b qui sont montés à rotation dans des oreilles 12a et 12b articulées en 13a et 13b sur le corps 1. Les axes 11a et 11b portent des roues dentées 14a et 14b qui peuvent, par pivotement des oreilles, venir s'engrener avec un pignon 15 calé sur un axe 16. Ce pignon est en prise avec un pignon 17 qui est lui-même en prise avec un pignon 18 calé sur l'arbre 5. Les axes de l'arbre 5 et du pignon 17 ainsi que l'axe 16 sont situés dans le plan médian A-A de l'outil.

Chacune des oreilles 12a et 12b est solidaire d'un pion 19a ou 19b qui est engagé dans une lumière horizontale 20 d'une chape 21 mobile verticalement. Cette chape est solidaire d'un axe 22 qui est monté coulissant dans le corps 1 et porte à son extrémité une paire de galets 23 montés sur un même axe 24. Ce galet est engagé dans une lumière oblique 25 d'un chariot 26 qui est monté coulissant par rapport au corps 1 par l'intermédiaire de roulettes 27 et est attelé à un vérin 28. La manoeuvre de ce vérin fait déplacer horizontalement le chariot 26 qui entraîne un déplacement vertical de l'axe 22 et de la chape 21 qui lui est liée. Par l'intermédiaire des pions 19a et 19b cette chape fait pivoter les oreilles 12a et 12b, ce qui a pour effet de rapprocher les galets 10a et 10b du plan médian A-A de l'outil ou de l'écarter de ce plan, suivant le sens d'actionnement du vérin 28.

Une spatule 29 destinée à écarter la lèvre du joint à monter est fixée sur la tige de piston d'un vérin 30 fixé sur un support 31; un axe 32 monté coulissant dans une plaque 33, qui est fixée au support 31, limite le mouvement de coulissement de la tige de vérin. Le support 31 est rapporté sur un axe 34 qui est monté coulissant dans le corps 1 et est solidaire d'une fourchette 35 attelée à la tige de piston d'un verin 36.

Enfin une roulette 37 montée folle sur l'axe 34 et immobilisée en translation par une chape 38 peut coopérer avec les galets mobiles 10a et 10b pour former pince pour le joint de porte à mettre en place.

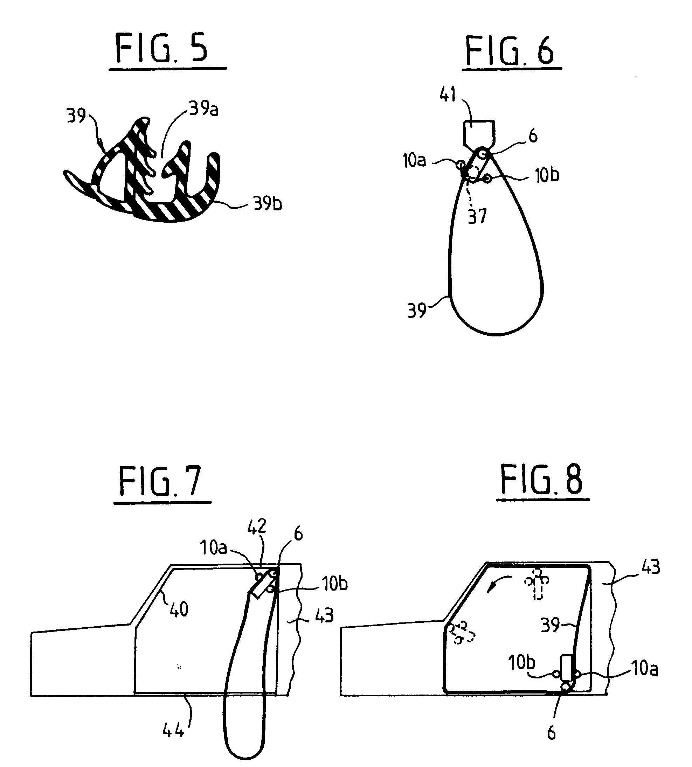

L'outil qui vient d'être décrit permet de poser un joint en anneau 39 sur une feuillure de porte 40 d'un véhicule automobile. Un tel joint présente une partie 39a en forme de pince et une lèvre de finition 39b (Figure 5 ). Les joints sont initialement suspendus sur le bord de la ligne de pose dans un dispositif 41 en forme de vé (Figure 6). On utilise le galet 10a ou 10b suivant la porte dans la feuillure de laquelle le joint est à poser. On suppose ci-après qu'il s'agit de la feuillure de la porte avant gauche.

L'outil est approché du joint. Pendant ce mouvement, le vérin 28 est amené en position rentrée de sorte que l'axe 22 vient en position haute et que les galets 10a et 10b viennent en position escamotée (Figure 6). En même temps, les vérins 36 et 30 ont été amenés en position sortie de façon que la spatule 29 écarte la lèvre de finition 39b du joint. La roulette 37 et la roulette 6 viennent tangenter le côté extérieur du joint et le galet 10a passe au-dessus de celui-ci.

La position d'accostage étant atteinte, le vérin 28 est amené en position sortie de sorte que les oreilles 12a et 12b pivotent et que le galet 10a vient plaquer le joint 39 contre la roulette 37; en même temps, la roue dentée 14a vient en prise avec le pignon 15.

Le joint est ainsi pris en pince et l'outil se dirige vers la feuillure 40 de l'entrée de porte avant gauche.

A l'aide de la roulette 6 l'outil insère alors le joint sur la feuillure à l'intersection du pavillon 42 et du pied milieu 43 (Figure 7). Puis le moteur 9 est actionné de sorte que la roulette 6 contraint le joint en position et parfait la pose. Les galets 10a et 10b sont également entraînés et, comme le joint est pincé entre le galet 10a et la roulette 37, il est déplacé longitudinalement, ce qui a pour effet à la fois de le recentrer et de le pousser vers la feuillure, parallèlement à celle-ci et la roulette 6 chausse le joint sur la feuillure.

Le joint est débité jusqu'aux trois quarts, c'est-à-dire jusqu'à l'intersection du seuil de porte 44 et du pied milieu 43 (Figure 8). A ce moment, l'outil ne peut poursuivre son chemin car son déplacement aurait pour conséquence de déchausser la partie du joint déjà posée, le joint étant tendu entre la roulette 10a et le coin du pavillon. On amène alors le vérin 28 en position rentrée, ce qui libère le joint, on dégage l'outil, on amène de nouveau le vérin 28 en position sortie pour ramener les galets 10a et 10b vers le plan médian de l'outil, pour éviter que ceux-ci soient une gêne, et on roule avec la roulette 6 sur le dos du joint 39 du bas du pied milieu 43 au pavillon 42; à ce moment, le joint est orienté car il est maintenu au coin du pavillon 42 et sur le seuil de porte 44. Le joint étant posé, l'outil peut procéder à la pose d'un autre joint.

Lorsque le joint doit recouvrir une ébénisterie, le vérin 30 est en position sortie et le vérin 36 en position rentrée de sorte que la spatule 29 glisse sur la lèvre 39b du joint en assurant que cette lèvre recouvre correctement l'ébénisterie. Lorsqu'il y a un obstacle au cours de la pose, par exemple une patte de support, le vérin 36 est amené en position sortie, ce qui dégage la spatule.

## Revendications

1. Outil de robot pour la pose, sur une feuillure de porte d'un véhicule automobile, d'un joint annulaire (39) muni d'une partie en forme de pince (39a) propre à s'engager sur la feuillure, qui comprend une première roulette motorisée (6) agissant à l'extérieur de la pince pour la chausser sur la feuillure, et une deuxième roulette (10a ou 10b) engagée à l'intérieur de la pince caractérisé en ce que la deuxième roulette (10a ou 10b) coopère avec une roulette folle (37) pour centrer le joint en amont du point chaussé, et
est également motorisée en synchronisme avec la première roulette.

2. Outil selon la revendication 1,
caractérisé en ce qu'il comporte une troisième roulette motorisée (10b ou 10a) montée symétriquement par rapport à la deuxième et propre à exercer la même fonction en coopération avec la même roulette folle (37), selon le sens du déroulement de la pose.

3. Outil selon la revendication 2,
caractérisé en ce que la deuxième roulette (10a) et la troisième roulette (10b) sont montées sur des oreilles escamotables (12a et 12b).

4. Outil selon la revendication 3,
caractérisé en ce que les oreilles (12a et 12b) sont montées pivotantes sur le corps de l'outil et en ce que ce dernier comprend un vérin (28) pour faire pivoter les oreilles.

5. Outil selon la revendication 3 ou 4,
caractérisé en ce que les axes (11a et 11b) des roulettes (10a et 10b) portent des roues dentées (14a et 14b) qui peuvent, par pivotement des oreilles (12a et 12b) venir s'engrener avec un pignon (15) lié en rotation à un pignon (18) calé sur l'arbre de la roulette (6).

6. Outil selon l'une des revendications 1 à 5 destiné à la pose d'un joint (39) muni d'une lèvre (39b) cache-ébénisterie,
caractérisé par le fait qu'il comprend des moyens (29) pour écarter la lèvre (39b) de la première roulette (10a) pendant le chaussage.

7. Outil selon la revendication 6,
caractérisé en ce que les moyens pour écarter la lèvre (39b) sont constitués par une spatule (29) fixée sur la tige de piston d'un premier vérin (30) fixé sur un axe (34) qui est monté coulissant dans le corps (1) de l'outil et peut être déplacé axialement par un second vérin (36).

## Claims

1. Robot tool for the placing on a door rabbet of a motor vehicle an annular joint (39) provided with one plier-shaped portion (39a) able to be engaged on the rabbet which includes one first motorized small wheel (6) acting on the outside of the pliers so as to fit it on the rabbet, and a second small wheel (10a or 10b) engaged inside the pliers, wherein the second small wheel (10a or 10b) cooperates with a loose small wheel (37) so as to center the joint upstream of the fitted point and is also motorized in synchronism with the first small wheel.

2. Tool according to claim 1,
wherein it comprises a third motorized small wheel (10b or 10a) mounted symmetrically with respect to the second wheel and able to exert the same function in cooperation with the same loose small wheel (37) according to the direction of placing.

3. Tool according to claim 2,
wherein the second small wheel (10a) and the third small wheel (10b) are mounted on retractable slugs (12a and 12b).

4. Tool according to claim 3,
wherein the slugs (12a and 12b) are mounted pivoting on the body of the tool and wherein the latter includes a jack (28) to make the slugs pivot.

5. Tool according to claim 3 or 4,
wherein the spindles (11a and 11b) of the small wheels (10a and 10b) bear toothed wheels (14a and 14b) which, via pivoting of slugs (12a and 12b) are able to become geared with a gear (15) linked in rotation to a gear (18) shimmed on the shaft of the small wheel (6).

6. Tool according to any one of claims 1 to 5 for the placing of a joint (39) fitted with a cabinet mask lip (39b),
wherein it includes means (29) to distance the lip (39b) from the first small wheel (10a) during fitting.

7. Tool according to claim 6,
wherein the means to distance the lip (39b) are constituted by a spatula (29) secured to the piston rod of a first jack (30) secured to a spindle (34) mounted sliding in the body (1) of the tool and may be moved axially by a second jack (36).

## Patentansprüche

1. Roboterwerkzeug zum Anbringen einer ringförmigen Dichtung (39) an einem Türfalz eines Kraftfahrzeugs, wobei die Dichtung mit einem zangenförmigen Teil (39a) versehen ist, der dazu geeignet ist, auf den Falz aufgesteckt zu werden, welches eine erste motorisch angetriebene Rolle (6) aufweist, die auf die Außenseite der Zange einwirkt, um sie auf den Falz aufzuziehen, und eine zweite Rolle (10a oder 10b), die an der Innenseite der Zange angreift dadurch gekennzeichnet, daß die zweite Rolle (10a oder 10b) mit einer losen Rolle (37) zusammenwirkt, um die Dichtung oberhalb des Aufziehpunktes zu zentrieren, und ebenfalls motorisch synchron zur ersten Rolle angetrieben ist.

2. Werkzeug nach Anspruch 1 dadurch gekennzeichnet, daß es eine dritte motorisch angetriebene Rolle (10b oder 10a) aufweist, die symetrisch zur zweiten Rolle angeordnet und dazu geeignet ist, die gleiche Funktion im Zusammenwirken mit der gleichen losen Rolle (37) in Richtung des Verlaufs des Anbringens auszuüben.

3. Werkzeug nach Anspruch 2 dadurch gekennzeichnet, daß die zweite Rolle (10a) und die dritte Rolle (10b) an aufklappbaren Laschen (12a und 12b) angeordnet sind.

4. Werkzeug nach Anspruch 3 dadurch gekennzeichnet, daß die Laschen (12a und 12b) schwenkbar am Grundkörper des Werkzeugs angeordnet sind und daß dieser Letztere einen Kolben-Zylinderantrieb (28) zum Verschwenken der Laschen aufweist.

5. Werkzeug nach Anspruch 3 oder 4 dadurch gekennzeichnet, daß die Achsen (11a und 11b) der Rollen (10a und 10b) Zahnräder (14a und 14b) tragen, welche durch Verschwenken der Laschen (12a und 12b) in Eingriff mit einem Ritzel (15) kommen können, das in Bezug auf Rotation mit einem auf der Welle der Rolle (6) festgekeilten Ritzel (18) verbunden ist.

6. Werkzeug nach einem der Ansprüche 1 bis 5 bestimmt zum Anbringen einer mit einer gehäuseabdeckenden Lippe (39b) versehenen Dichtung (39) gekennzeichnet durch die Tatsache, daß es Mittel (29) aufweist, um die Lippe (39b) während des Aufziehens auf Abstand zu der ersten Rolle (10a) zu bringen.

7. Werkzeug nach Anspruch 6 dadurch gekennzeichnet, daß die Mittel zum Aufabstandbringen der Lippe (39b) durch einen Spatel (29) gebildet werden, der an der Kolbenstange eines ersten Kolben-Zylinderantriebs (30) befestigt ist, welcher an einer Achse (34) angeordnet ist, die verschiebbar im Grundkörper (1) des Werkzeugs montiert ist und in axialer Richtung mittels eines zweiten Kolben-Zylinderantriebs (36) verschoben werden kann.
